# FASCICULE DE BREVET EUROPEEN

(11) **EP 0 908 714 B1**
(45) Date de publication et mention de la délivrance du brevet: **22.12.2004**
(21) Numéro de dépôt: 98402451.3
(22) Date de dépôt: 06.10.1998
(51) Int. Cl.: G01L 5/00, G01M 13/04, F16C 19/52

(54) **Palier à roulement**
Lageranordnung
Bearing assembly

(30) Priorité: 10.10.1997 FR 9712700
(43) Date de publication de la demande: 14.04.1999
(73) Titulaire: RKS S.A., 89204 Avallon (FR)
(72) Inventeur: Bourgeois-Jacquet, Pierre, F-89204 Avallon Cedex (FR); Torelli, Serge, Société Altran Technologies, F-75858 Paris Cedex 17 (FR)
(74) Mandataire: Casalonga, Axel

(56) Documents cités:
- EP-A- 0 637 734

## Description

La présente invention concerne le domaine des paliers à roulement du type comprenant une bague intérieure, une bague extérieure, une rangée d'éléments roulants disposés entre les bagues intérieure et extérieure, et une cage de maintien des éléments roulants.

Dans certaines applications, ces paliers à roulement sont pourvus d'instruments de mesure solidaires des éléments roulants ou de la cage. Par exemple, dans le cas d'un palier à roulement de grand diamètre, il est intéressant de connaître la charge instantanée du palier à roulement. Ainsi on peut surveiller en permanence les conditions de fonctionnement du palier à roulement, un changement de la charge mesurée en dehors des valeurs normales pouvant indiquer une erreur ou même des dommages subis par le palier à roulement. Or la charge appliquée au palier à roulement n'est parfois mesurable qu'au niveau des éléments roulants eux-même.

Une technique de mesure, décrite dans le document EP-A-0 637 734 (AB SKF), consiste à mesurer la déformation d'un des éléments roulants pour en déduire ensuite l'amplitude de la charge sur l'ensemble du palier à roulement. Une jauge de contrainte est disposée dans un perçage prévu dans l'un des éléments roulants. Cette jauge de contrainte doit être alimentée en énergie électrique et transmettre des informations à des éléments solidaires de l'une des bagues adjacentes. La jauge de contrainte est alimentée en énergie électrique par une bobine solidaire de l'élément roulant, l'énergie étant transmise par induction au moyen d'une bobine solidaire de l'une des bagues.

Ce système est très performant mais son domaine d'application est limité aux roulements de taille moyenne en raison de la difficulté à réaliser l'alimentation électrique. Le couplage magnétique entre les deux bobines ne garantit pas une transmission efficace de l'énergie. Pour des roulements de grandes dimensions tels que ceux utilisés dans les tunneliers, une telle alimentation devient très coûteuse.

La présente invention a pour but de remédier aux inconvénients du dispositif précité en proposant un palier à roulement pourvu d'une alimentation électrique satisfaisante même pour les plus grands diamètres.

L'invention a également pour objet de proposer un moyen de génération d'énergie électrique standard pour des paliers à roulement de différents diamètres.

Le palier à roulement, selon l'invention, est du type comprenant une bague fixe, une bague tournante et un ensemble roulant disposé entre la bague fixe et la bague tournante et comprenant au moins une rangée d'éléments roulants et une cage de maintien desdits éléments roulants. L'ensemble roulant comprend un organe consommateur d'énergie et un moyen d'alimentation en énergie électrique. L'ensemble roulant comprend également un moyen de génération d'énergie électrique a partir d'énergie mécanique. L'énergie électrique est ainsi générée directement au niveau de l'ensemble roulant ce qui supprime les problèmes liés au faible rendement de la transmission par induction.

Dans un mode de réalisation de l'invention, le moyen de génération d'énergie électrique comprend une génératrice dynamométrique ou une boucle de Hertz. Dans le cas où la vitesse de rotation des éléments roulants est trop faible pour que la génératrice fournisse suffisamment d'énergie, celle-ci peut être pourvue d'un réducteur que l'on monte en accélérateur de façon que la génératrice soit entraînée à une vitesse de rotation supérieure à celle des éléments roulants.

Dans un mode de réalisation de l'invention, le moyen de génération d'énergie électrique est solidaire d'un élément roulant et peut être couplé élastiquement à un organe extérieur à l'élément roulant, par exemple à la cage de maintien.

Avantageusement, le moyen de génération d'énergie électrique est disposé dans un trou cylindrique de l'élément roulant.

Dans un autre mode de réalisation de l'invention, le moyen de génération d'énergie électrique est solidaire de la cage et peut être couplé élastiquement à un organe extérieur à la cage, par exemple à un élément roulant.

On prélève ainsi de l'énergie mécanique au niveau de la rotation relative d'un élément roulant par rapport à la cage et on la transforme en énergie électrique capable d'alimenter l'organe consommateur d'énergie. L'organe consommateur d'énergie peut être une jauge de contrainte solidaire d'un élément roulant, un capteur de l'usure d'une piste de roulement, solidaire de la cage, un capteur de vitesse etc.

Pour fournir une énergie électrique de bonne qualité, le moyen de génération d'énergie électrique peut être pourvu d'un moyen de régulation électronique capable de fournir une tension constante. Une telle régulation électronique est particulièrement utile dans le cas où la vitesse de rotation du palier à roulement est variable.

L'ensemble roulant est également équipé d'un moyen pour transmettre un signal en provenance d'un moyen de mesure à l'une des bagues du palier à roulement. Le moyen de transmission peut comprendre un moyen pour moduler en fréquence le signal en provenance du moyen de mesure, et une antenne. L'une des bagues du palier à roulement sera également pourvue d'une antenne de réception du signal en provenance du moyen de transmission, par exemple une antenne filaire.

On dispose ainsi d'un moyen de génération d'énergie électrique indépendant de toute alimentation extérieure et qui peut être standardisé pour des paliers à roulement de diamètres différents pouvant atteindre plusieurs mètres.

La présente invention sera mieux comprise et d'autres avantages apparaîtront à la description détaillée de quelques modes de réalisation pris à titre d'exemples nullement limitatifs et illustrés par les dessins annexés sur lesquels :
la figure 1 est une vue en coupe d'un ensemble roulant conforme à l'invention ;
la figure 2 est une vue schématique du couplage élastique entre l'élément roulant et la cage ; et
la figure 3 montre une variante de la figure 2.

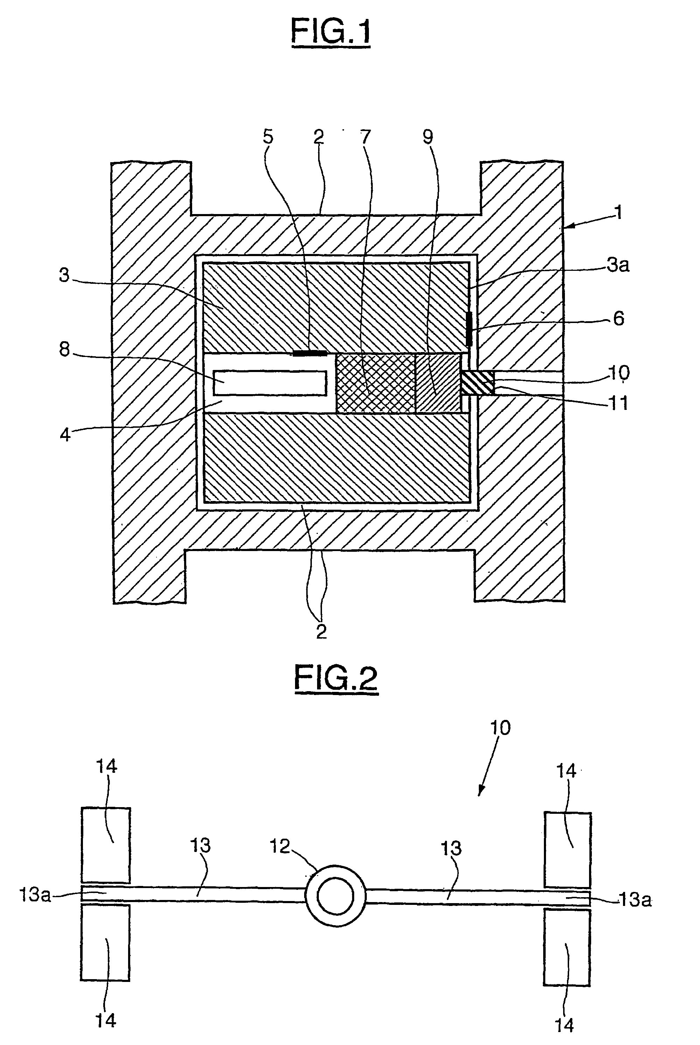

Comme on peut le voir sur la figure 1, l'ensemble roulant comprend une cage 1 pourvue de fenêtres 2 destinées à accueillir des éléments roulants 3, par exemple des rouleaux. Dans la fenêtre 2 est disposé un unique élément roulant 3. Toutefois, à titre de variante on pourrait prévoir de disposer deux rouleaux côte à côte. Dans le cas d'un palier à roulement de grand diamètre, la cage 1 peut être réalisée en bronze et atteindre une épaisseur de l'ordre de 3 cm. L'ensemble roulant est disposé entre les pistes de roulement respectives d'un bague intérieure et d'une bague extérieure d'un palier à roulement non représenté.

L'élément roulant 3 est pourvu d'un trou axial traversant 4 dans lequel est disposé un module 5 de jauges de contrainte comprenant plusieurs jauges, par exemple quatre, destinées à la mesure des déformations subies par l'élément roulant 3 à partir de laquelle on peut déduire la charge de cet élément roulant 3 et la charge subie par l'ensemble du palier à roulement. Les jauges de contrainte du module 5 sont reliées, d'une part, à des moyens d'alimentation en énergie électrique, et, d'autre part, à une antenne 6 disposée sur une surface radiale 3a de l'élément roulant 3.

Les moyens d'alimentation électrique comprennent une génératrice 7, par exemple un moteur pas à pas utilisé en génératrice, et un boîtier de régulation électronique 8. La génératrice 7, du type dynamométrique, est entraînée par un réducteur 9 lui-même relié à un organe de couplage élastique en contact avec la cage 1. La génératrice 7 peut être une machine synchrone, une machine asynchrone ou encore un moteur pas à pas. L'ensemble des moyens d'alimentation électrique est disposé dans le trou 4 de l'élément roulant 3. Le boîtier de régulation électronique permet de fournir aux jauges de contrainte une tension électrique continue constante même dans le cas où la vitesse de rotation de l'élément roulant 3 par rapport à la cage 1 varie. Le réducteur 9 est solidaire en rotation de l'élément roulant 3 et est monté en accélérateur c'est-à-dire qu'il entraîne la génératrice 7 à une vitesse supérieure à celle à laquelle il est lui-même entraîné par l'organe de couplage élastique 10.

A titre de variante, si la vitesse de rotation de l'élément roulant 3 par rapport à la cage 1 est suffisante pour fournir l'énergie électrique voulue, on pourrait prévoir des moyens d'alimentation électrique dépourvus de réducteur.

L'organe de couplage élastique 10 fait saillie dans une cavité 11 prévue dans l'épaisseur de la cage 1.

Comme on peut le voir sur la figure 2, l'arbre d'entrée 12 du réducteur est solidaire de deux bras radiaux 13 diamétralement opposés, dont les extrémités libres 13a font saillie chacune entre deux éléments élastiques 14. Les éléments élastiques 14 peuvent être réalisés en matériau élastomère et sont en contact avec la cavité de la cage de maintien que l'on prévoira de forme rectangulaire de façon à être en concordance de forme avec l'organe de couplage élastique 10. Les éléments élastiques 14 sont prévus pour s'adapter au jeu relatif entre l'élément roulant et la cage qui peut atteindre plusieurs millimètres sans exercer de contraintes importantes sur l'arbre 12.

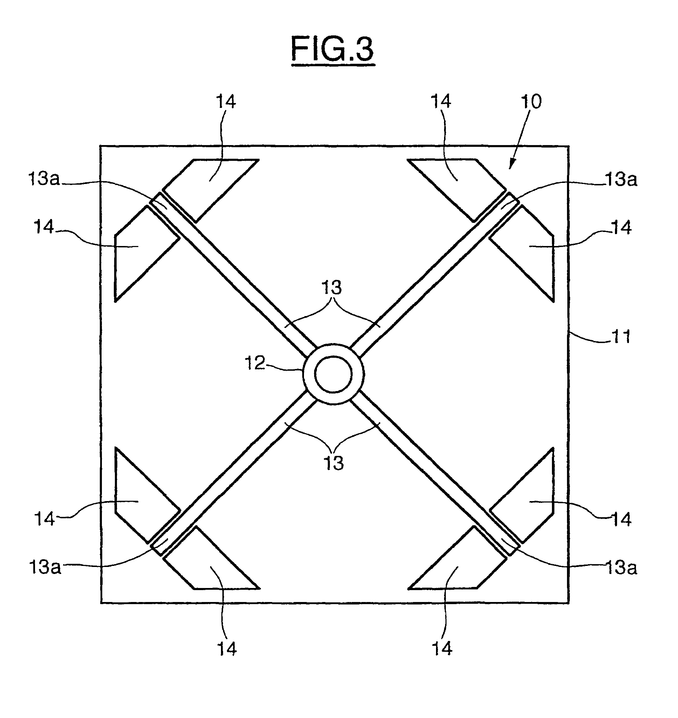

Dans la variante illustrée sur la figure 3, la cavité 11 de la cage est de forme sensiblement carrée.L'organe de couplage élastique 10 est pourvu de quatre bras radiaux 13 régulièrement espacés et dont les extrémités libres 13a sont disposées chacune entre deux éléments élastiques 14 de forme adaptée à la cavité 11. Les bras radiaux 13 sont dirigés vers les angles de la cavité 11. Les éléments élastiques 14 sont pourvus d'une face oblique destinée à entrer en contact avec la cavité 11.

Ainsi, l'arbre 12 du réducteur 9 est solidaire en rotation de la cage 1 et est animé d'un mouvement de rotation relatif par rapport au réducteur 9 proprement dit en raison de la rotation de l'élément roulant 3. Bien entendu, on peut prévoir de disposer les moyens d'alimentation électrique dans une cavité de la cage ou, à tout le moins solidaires de cette dernière et l'organe de couplage élastique solidaire d'un élément roulant.

Grâce à l'invention, le palier à roulement est pourvu d'une alimentation électrique dont le rendement est excellent et dont la puissance est suffisante pour les différents moyens de mesure susceptibles d'être montés soit sur la cage de maintien, soit sur un élément roulant. L'alimentation électrique peut être standardisée pour différents types ou différents diamètres de palier à roulement.

## Revendications

1. Palier à roulement du type comprenant une bague fixe, une bague tournante et un ensemble roulant disposé entre la bague fixe et la bague tournante et comprenant au moins une rangée d'éléments roulants (3) et une cage de maintien (1) desdits éléments roulants, le dit ensemble roulant comprenant un organe consommateur d'énergie, et un moyen d'alimentation en énergie électrique, **caractérisé par le fait que** ledit ensemble roulant comprend un moyen de génération d'énergie électrique *à partir d'énergie mécanique*.

2. Palier à roulement selon la revendication 1, **caractérisé par le fait que** le moyen de génération d'énergie électrique comprend une génératrice dynamométrique (7).

3. Palier à roulement selon la revendication 1, **caractérisé par le fait que** le moyen de génération d'énergie électrique comprend une boucle de Hertz.

4. Palier à roulement selon l'une quelconque des revendications précédentes, **caractérisé par le fait que** le moyen de génération d'énergie électrique est solidaire d'un élément roulant.

5. Palier à roulement selon la revendication 4, **caractérisé par le fait que** le moyen de génération d'énergie électrique est couplé élastiquement à un organe extérieur à l'élément roulant.

6. Palier à roulement selon la revendication 5, **caractérisé par le fait que** le moyen de génération d'énergie électrique est couplé élastiquement à la cage de maintien.

7. Palier à roulement selon l'une quelconque des revendications 4 à 6, **caractérisé par le fait que** le moyen de génération d'énergie électrique est disposé dans un trou cylindrique (4) de l'élément roulant.

8. Palier à roulement selon l'une quelconque des revendications 1 à 3, **caractérisé par le fait que** le moyen de génération d'énergie électrique est solidaire de la cage.

9. Palier à roulement selon la revendication 8, **caractérisé par le fait que** le moyen de génération d'énergie électrique est couplé élastiquement à un organe extérieur à la cage.

10. Palier à roulement selon la revendication 9, **caractérisé par le fait que** le moyen de génération d'énergie électrique est couplé élastiquement à un élément roulant.

## Claims

1. Rolling bearing of the type comprising a fixed ring, a rotating ring and a rotating assembly placed between the fixed ring and the rotating ring and comprising at least one row of rolling elements (3) and a cage (1) for retaining the said rolling elements, the said rolling assembly comprising an energy consuming member, and a means of supplying electrical energy, **characterized in that** the said rolling assembly comprises a means of generating electrical energy from mechanical energy.

2. Rolling bearing according to Claim 1, **characterized in that** the means of generating electrical energy comprises a dynamo generator (7).

3. Rolling bearing according to Claim 1, **characterized in that** the means of generating electrical energy comprises a Hertz loop.

4. Rolling bearing according to any one of the preceding claims, **characterized in that** the means of generating electrical energy is integral with a rolling element.

5. Rolling bearing according to Claim 4, **characterized in that** the means of generating electrical energy is coupled elastically to a member external to the rolling element.

6. Rolling bearing according to Claim 5, **characterized in that** the means of generating electrical energy is coupled elastically to the cage.

7. Rolling bearing according to any one of Claims 4 to 6, **characterized in that** the means of generating electrical energy is placed in a cylindrical hole (4) of the rolling element.

8. Rolling bearing according to any one of Claims 1 to 3, **characterized in that** the means of generating electrical energy is integral with the cage.

9. Rolling bearing according to Claim 8, **characterized in that** the means of generating electrical energy is coupled elastically to a member external to the cage.

10. Rolling bearing according to Claim 9, **characterized in that** the means of generating electrical energy is coupled elastically to a rolling element.

## Patentansprüche

1. Wälzlager des Typs, der einen feststehenden Ring, einen sich drehenden Ring und ein zwischen dem feststehenden Ring und dem sich drehenden Ring befindliches Drehsystem umfasst, das wenigstens eine Reihe Wälzkörper (3) und einen Wälzkörper-Käfig (1) umfasst, wobei das genannte Drehsystem ein Energie verbrauchendes Organ und eine elektrische Energieversorgungseinrichtung umfasst,
**dadurch gekennzeichnet, dass** das genannte Drehsystem eine Einrichtung umfasst, die aus mechanischer Energie elektrische Energie erzeugt.

2. Wälzlager nach Anspruch 1, **dadurch gekennzeichnet, dass** die elektrische Energieversorgungseinrichtung einen dynamometrischen Generator (7) umfasst.

3. Wälzlager nach Anspruch 1, **dadurch gekennzeichnet, dass** die elektrische Energieversorgungseinrichtung eine Hertzsche Schleife umfasst.

4. Wälzlager nach einem der vorangehenden Ansprüche, **dadurch gekennzeichnet, dass** die elektrische Energieversorgungseinrichtung mit einem Wälzkörper verbunden ist.

5. Wälzlager nach Anspruch 4, **dadurch gekennzeichnet, dass** die elektrische Energieversorgungseinrichtung elastisch mit einem außerhalb des Wälzkörpers befindlichen Organ gekuppelt ist.

6. Wälzlager nach Anspruch 5, **dadurch gekennzeichnet, dass** die elektrische Energieversorgungseinrichtung elastisch mit dem Wälzkörper-Käfig gekuppelt ist.

7. Wälzlager nach einem der Ansprüche 4 bis 6, **dadurch gekennzeichnet, dass** die elektrische Energieversorgungseinrichtung in einem zylindrischen Loch (4) des Wälzkörpers angeordnet ist.

8. Wälzlager nach einem der Ansprüche 1 bis 3, **dadurch gekennzeichnet, dass** die elektrische Energieversorgungseinrichtung mit dem Käfig verbunden ist.

9. Wälzlager nach Anspruch 8, **dadurch gekennzeichnet, dass** die elektrische Energieversorgungseinrichtung elastisch mit einem außerhalb des Käfigs befindlichen Organ gekuppelt ist.

10. Wälzlager nach Anspruch 9, **dadurch gekennzeichnet, dass** die elektrische Energieversorgungseinrichtung elastisch mit einem Wälzkörper gekuppelt ist.
